# EUROPÄISCHE PATENTSCHRIFT

(11) **EP 1 130 059 B1**
(45) Veröffentlichungstag und Bekanntmachung des Hinweises auf die Patenterteilung: **27.11.2002**
(21) Anmeldenummer: 01104187.8
(22) Anmeldetag: 21.02.2001
(51) Int. Cl.: C08L 77/02, C08L 77/06, C08K 3/32, C08K 5/49

(54) **Farblose, hochtransparente Polyamidblends mit verbesserter Spannungsrissbeständigkeit**
Colourless, highly transparent Polyamide blends with improved resistance to stress-cracking
Masses à mouler à base de polyamide, transparent et incolore ayant une bonne résistance à la fissuration sous contrainte

(30) Priorität: 01.03.2000 DE 10009756
(43) Veröffentlichungstag der Anmeldung: 05.09.2001
(73) Patentinhaber: EMS-Chemie AG, 7013 Domat/Ems (CH)
(72) Erfinder: Bühler, Friedrich Severin, Dr.rer.nat.,Dipl.-Chem., 7430 Thusis (CH)
(74) Vertreter: Becker Kurig Straus

(56) Entgegenhaltungen:
- EP-A- 0 659 836
- DE-A- 2 150 678
- GB-A- 1 019 348
- US-A- 5 886 087

## Beschreibung

Die vorliegende Erfindung betrifft farblose, hochtransparente Polyamid-Mischungen (Blends) oder Legierungen mit verbesserter Transparenz, Chemikalienbeständigkeit und geringer Eigenfarbe sowie ein Verfahren, das die Plastifizierleistung und die Homogenität von Blends aus Polyamid gemäss Formeln Ia/Ib (vgl. Patentansprüche) und teilkristallinen Polyamiden gemäß Formeln IIa/IIb (vgl. Patentansprüche) verbessert. Auf der Basis der erfindungsgemässen Zusammensetzungen werden transparente Polyamid-Blends erhalten, die in Bezug auf Transparenz, Farbe und Chemikalienbeständigkeit, insbesondere Spannungsrissbeständigkeit gegenüber Isopropanol, verbesserte Eigenschaften zeigen, ohne daß Einbussen in den mechanischen Eigenschaften resultieren. Gleichzeitig konnte die Durchsatzleistung beim Extrudieren unter Erhaltung optimaler Transparenz deutlich gesteigert werden.

Amorphe oder teilkristalline Polyamide, Copolyamide oder Blockcopolyamide werden in zahlreichen technischen Anwendungen eingesetzt, die eine hohe Chemikalienbeständigkeit, Wärmeformbeständigkeit, Zähigkeit und Festigkeit verlangen. Typische Verarbeitungsformen sind Fasern, Folien, Hohlkörper, Schmelzklebstoffe und technische Spritzgussmaterialien. In zahlreichen Fällen werden hochtransparente Werkstoffe verlangt wie beispielsweise für Autolampen, Sichtfenster, Brillenrahmen, optische Linsen und Gläser, Filtertassen, elektrische Bauteile, Lichtwellenleiter, Displayfenster, Schaugläser, Verpackungsfolien, Flaschen und Behälter. Herausragende Eigenschaft ist die chemische Resistenz gegenüber Flüssigkeiten, die im Automobilbereich verwendet werden.

Geeignete Eigenschaften von Homopolyamiden, Copolyamiden oder Blockcopolyamiden werden häufig durch die Monomeranteile wie Lactame oder Aminosäuren, Diamine und Dicarbonsäuren eingestellt und durch Verfahren wie z.B. Kokondensation hergestellt. Teilkristalline Polyamide werden häufig in der Form von Polyamid-Blends durch Mischen oder Legieren in der Schmelze zum gewünschten Eigenschaftsprofil kombiniert und je nach Anforderung beispielsweise mit Verstärkungsstoffen, Stabilisatoren wie z.B. phenolische Antioxidantien und HALS-Typen, Farbstoffen, Verarbeitungshilfsmitteln, Flammschutzmitteln ausgerüstet.

Die Herstellung transparenter, amorpher oder transparent mikrokristalliner Polyamide, Copolyamide oder Blockcopolyamide erfolgt, wie bereits oben festgestellt wurde, in den meisten Fällen über die direkte Kokondensation, wobei die einzelnen Monomeranteile so gewählt werden, dass die gewünschten Zieleigenschaften erhalten werden und die Kristallisation unterdrückt oder in der Form von Mikrokristalliten eingestellt wird.

Die Herstellung transparenter Polyamid-Blends ist dadurch erschwert, dass entweder mischbare oder isorefraktive Polyamide kombiniert werden müssen. Nicht mischbare und nicht isorefraktive Polyamide lassen sich nur transparent mischen oder legieren, wenn durch Verträglichkeitsvermittler, hohe Mischtemperaturen oder mechanische Zwangsmischungen bei niederen Maschinendurchsätzen die Partikel der Phasengrössen unter die Streugrösse des sichtbaren Lichtes gebracht werden können. Der zusätzliche Extrusionsschritt verteuert die Produkte gegenüber der Direktkondensation und wird deshalb bei transparenten Polyamiden selten eingesetzt.

Wird in amorphen Polyamiden beispielsweise eine verbesserte Chemikalienbeständigkeit gewünscht, kann das durch die bekannte Methode der Kokondensation, beispielsweise durch den Einbau langkettiger, aliphatischer Monomerer wie Aminosäuren, Diamine oder Dicarbonsäuren mit mehr als 6 C-Atomen oder von Lactamen mit 6 bis 12 C-Atomen erfolgen.

Verbesserte Chemikalienbeständigkeit, gekennzeichnet durch reduzierte Quellung in Ethanol, kann durch die Herstellung von Blends aus amorphen Polyamiden mit teilkristallinen Polyamiden über einen Extrusionsschritt erzielt werden (vgl. DE 26 42 244 C2).

Wenn eine bestimmte Schmelzenthalpie der teilkristallinen Komponente im Blend erhalten bleibt, wird eine optimale Spannungsrissbeständigkeit, beispielsweise in Isopropanol, erzielt.
Nachteilig ist, dass dadurch die Grundeigenschaften vom amorphen Polyamid verändert werden und dass die Transparenz durch die dispergierte Phase, die über die Schmelzenthalpie angezeigt wird, reduziert wird. Ein weiterer Nachteil besteht darin, dass je nach Mischwirkung des Formgebungsprozesses die Schmelzenthalpie reduziert wird und damit die Chemikalienbeständigkeit in Form von Spannungsrissbeständigkeit absinkt.

JP 60-215053 und 60-215054 (Kokai) beschreiben Blends aus transparenten Polyamiden, die aus Lactamen, Aminocarbonsäuren, cycloaliphatischem Diamin (bis-(4-aminocyclohexyl)-methan), Isophthalsäure und teilkristallinen aliphatischen Polyamiden aufgebaut sind. Es ist bekannt, dass diese Mischungen erhöhte Verweilzeiten (geringer Durchsatz) im Extruder brauchen, um transparentes Material zu erhalten. Bei optimalem Durchsatz werden trübe Produkte erhalten. Die zusätzliche Extrusion erhöht den Gelbstich der Produkte.

In EP 0 070 001 (Du Pont) werden Blends aus teilkristallinen und amorphen Polyamiden beschreiben. Diese amorphen Polyamiden enthalten auch cycloaliphatische Diamine für Anwendungen mit geringer Feuchtigkeitsaufnahme und guter ZnCl₂-Resistenz. Diese Blends sind aber nicht immer transparent. Gemäß EP 0 070 001 wird Phenylphosphinat als Hitzestabilisator eingesetzt.

Gemäß US 4,404,317 (Du Pont) soll die Massetemperatur bei der Extrusion von Blends aus amorphen und teilkristallinen Polyamiden 300°C nicht übersteigen, um optimale Farbe und geringer Abbau zu erhalten. Bezüglich Chemikalienresistenz und Spannungsrissverhalten werden keine Angaben gemacht.

EP 550 308 B1 beschreibt, dass zur Erhaltung von transparenten Polyamid-Blends aus Polyamid gemäss der dortigen Formel (I) und teilkristallinen Polyamiden Extrusionstemperaturen oberhalb 300°C notwendig sind, da die Mischbarkeit bei tiefen Temperaturen begrenzt ist und zu trüben Produkten fiihrt. Die Zielprodukte sollen keine Schmelzenthalpie der teilkristallinen Phase anzeigen um optimale Transparenz zu erhalten. Diese hohe thermische Belastung führt zu deutlicher Verfärbung der Produkte. Die verbesserte Chemikalienbeständigkeit wird durch reduzierte Quellungsneigung in Ethanol angegeben. Die reduzierte Quellungsneigung in Ethanol wird auf einen überwiegenden Anteil Terephthalsäure gegenüber Isophthalsäure zurückgeführt. Bezüglich Spannungsrissverhalten, beispielsweise in Isopropanol, werden keine Angaben gemacht.

Ferner wird in EP 550 308 B1 eine Verfahrensweise beschrieben, gemäss welcher Phosphorverbindungen als Umamidierungskatalysatoren zum Zweck der Nachkondensation im Extruder eingesetzt werden. Dabei wird wahlweise ein niederviskoses Polyamid-Vorkondensat eingesetzt und mit einem zweiten Polyamid extrudiert. Eine Nachkondensation im Extruder erfordert das Anlegen von Vakuum während der Extrusion und führt zur Erhöhung der Viskosität des Blends. Diese Art der Nachkondensation erfordert geringe Durchsätze und lange Verweilzeiten, was sich auf die Farbe negativ auswirkt. Beispiele zu dieser Verfahrensvariante sind nicht angegeben. Vorteile bezüglich chemischer Beständigkeit oder Spannungsrissverhalten werden nicht angegeben.

EP 0 720 631 B 1 beschreibt spezielle Phosphorverbindungen als Amidierungskatalysatoren, die als Masterbatch zu Polyamid 66 bei der Faserherstellung zugegeben werden können. Die Zugabe dieses Masterbatches zur Polyamidschmelze bei der Faserherstellung führt zu Fasern mit höherem Molekulargewicht und höherer Viskosität mit geringerem Gelanteil. Das Verhalten in amorphen Polyamiden wird nicht angegeben. Die Beständigkeit gegenüber Chemikalien und das Spannungsrissverhalten wird nicht beschrieben. Nachteil dieser Polyamid-Blends ist die erhöhte Viskosität, die bei der Spritzgiessverarbeitung das Fliessverhalten verschlechtert.

In EP 509 282 B1 und DE 38 21 325 A1 werden Phosphorverbindungen als Verarbeitungsstabilisatoren zur Verbesserung der Farbe von teilkristallinen Polyamidcompounds vorgeschlagen. Das Verhalten in transparenten und amorphen Polyamidblends wird nicht beschrieben. Über Chemikalienbeständigkeit und Spannungsrissverhalten werden keine Angaben gemacht.

Aufgabe der der vorliegenden Erfindung ist es daher, die oben dargelegten Nachteile des Standes der Technik zu vermeiden.

Überraschenderweise wurde nun erfindungsgemäß festgestellt, dass mit Hilfe von Phosphorverbindungen, die während der Extrusion den Blendkomponenten, bestehend aus beispielsweise amorphen und teilkristallinen Polyamiden, zugesetzt werden, hochtransparente Polyamid-Blends mit verbesserten Spannungsrissbeständigkeiten gegenüber Isopropanol (> 60 MPa) aufgrund einer sehr niedrigen Schmelzenthalpie (von unter 8 J/g; vgl. erfindungsgemäße Beispiele B4, B6) erhalten werden, auch dann, wenn hohe Maschinendurchsätze gefahren werden, wodurch kurze Verweilzeiten möglich sind (siehe Patentansprüche 1 und 3).

In den Unteransprüchen sind vorteilhafte Ausführungsformen der Erfindung enthalten.

Trotz kurzer Verweilzeiten wird somit erfindungsgemäß ein homogenes, transparentes Material erhalten, das bei Extrusionstemperaturen von 250°C bis 330°C bei ausgezeichneter Transparenz weder Abbau, Aufbau noch Verfärbung zeigt.

Die Quellung in Ethanol liegt für die erfindungsgemässen Blends im Bereich von etwa 18 bis 20 Gew.%, unabhängig davon ob das Polyamid I gemäss den Formeln Ia/Ib mehr Terephthalsäure wie Isophthalsäure oder überhaupt keine Terephthalsäure als Säurekomponente enthält.

Gegenüber Polyamid-Blends, die ohne die erfindungsgemäß eingesetzten Phosphorverbindungen hergestellt werden, bleibt die Spannungsrissbeständigkeit bei den erfindungsgemäßen Blends, beispielsweise gegenüber Isopropanol, auch dann auf hohem Niveau, wenn kein PA 12 Schmelzpeak der teilkristallinen Komponente, welcher die Transparenz einschränkt, mehr vorhanden ist (Beispiele B8/VB9, Tabelle 1).

Die chemische Beständigkeit, gemessen durch die Quellbarkeit in Ethanol zeigt für Blends mit oder ohne Phosphorverbindungen keine Unterschiede an.

Die Viskosität der erfindungsgemässen Blends bleibt niedrig, wobei keine Nachkondensation stattfindet, die die Fliessfähigkeit einer nachträglichen Spritzgiessverarbeitung einschränkt. Gegenüber Blends ohne Phosphorverbindungen werden erfindungsgemäß verbesserte Bindenahtfestigkeiten festgestellt.

Gegenüber direkt hergestelltem Kokondensat (Beispiel VB1, Tabelle 1), das genau die gleichen Bausteine in gleicher Menge enthält, liegt die Chemikalienbeständigkeit von den erfindungsgemäßen Blends, beispielsweise in Bezug auf Spannungsrisse in Isopropanol, deutlich höher. Die Quellung in Ethanol ist in den erfindungsgemäßen Blends deutlich geringer.

Bei der Verwendung von Phosphorverbindungen können insbesondere transparente Blends hergestellt werden, die ohne Phosphorverbindungen hohe Extrusionstemperaturen (>300°C) erfordern, um über ausreichende Homogenisierung die gewünschte Transparenz zu erzielen, oder lange Verweilzeiten bei geringer Durchsatzleistung brauchen und dadurch zur Verfärbung neigen. Mit Hilfe der erfindungsgemässen Formmassen wird bei der Compoundierung die Plastifizier- und Mischwirkung in Polyamiden nahezu verdoppelt, die thermische Schädigung wird deutlich reduziert. Die stabilisierende Wirkung bleibt während der nachträglichen Formgebung erhalten wodurch deutlich verbesserte Produkteigenschaften im Bereich Transparenz und Farbe entstehen.

Die Chemikalienbeständigkeit in Bezug auf Spannungsrissresistenz in Isopropanol bleibt in den erfindungsgemässen Formmassen im Gegensatz zu Blends ohne Phosphorverbindungen auch dann erhalten, wenn optimale Homogenität erzielt wird, so dass die teilkristalline Phase keine Schmelzenthalpie mehr anzeigt, während das Quellungsverhalten in Ethanol unverändert bleibt.

Die erfindungsgemässen Polyamid-Blends enthalten mindestens ein Polyamid (I) mit Ketten gemäss der Zusammensetzung nach den Formeln Ia/Ib und mindestens ein teilkristallines Polyamid (II) mit Ketten gemäss den Formeln IIa/IIb. Die Anteile Polyamid (I) und Polyamide (II) werden im Verhältnis 1:99 bis 99:1 eingesetzt, bevorzugt 10:90 bis 90:10, so dass die Summe gleich 100 Gew.% ergibt.

Als weitere Komponente wird mindestens eine Phosphorverbindung der Formel (III) in Mengen von 0,01 bis 2 Teilen, bezogen auf 100 Teile Polyamid (I) und/oder (II) und/oder mindestens eine Phösphonsäureanhydrid-Verbindung der Formel (IV) in Mengen von 0,01 bis 15 Teilen, bezogen auf 100 Teile Polyamid (I) und/oder (II), zugegeben, womit gleichzeitig eine flammhemmende Wirkung erzielt wird. Selbstverständlich können die Phosphorverbindungen gemäss Formel (III) oder Formel (IV) als Mischungen eingesetzt werden.

Wahlweise können ein oder mehrere übliche Stabilisatoren in Mengen von bis zu 2 Gew.-Teilen, bezogen auf 100 Gew.-Teile Polyamid, zugesetzt werden.

Selbstverständlich können den erfindungsgemäßen Polyamid-Blends Füll- und Verstärkungsstoffe, Flammschutzmittel, Weichmacher, Gleitmittel, Antioxidantin, UV-Stabilisatoren, Farbstoffe, Verarbeitungshilfsmittel und andere bekannte Ausrüstungsmittel zugegeben werden.

Das Polyamid (I) weist folgende Ketten der Formeln (Ia) und/oder (Ib) auf: 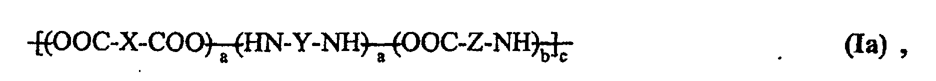 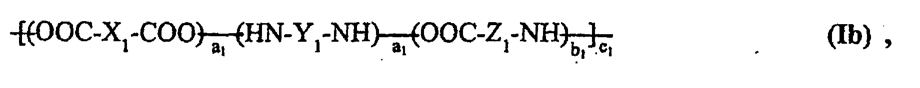 worin bedeuten:
- X=: meta-Phenyl, para-Phenyl, (CH₂): 4 bis 12 CH₂-Einheiten, Cyclohexyl, Naphtyl, Norbornyl, Norbornandimethyl, Trimethyl-hexamethylen,
- X₁=: meta-Phenyl, para-Phenyl, (CH₂): 2 bis 12 CH₂-Einheiten, Cyclohexyl, Naphtyl, Norbornyl, Norbornandimethyl, Trimethyl-hexamethylen,
- Y=: (CH₂): 2 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norbornandimethyl, Trimethyl-hexamethylen, Bis-(cyclohexyl)-methan, Bis-(cyclohexyl)-ethan, Bis-(cyclohexyl)-propan,
- Y₁=: (CH₂): 2 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norbornandimethyl, Trimethyl-hexamethylen, Bis-(cyclohexyl)-methan, Bis-(cyclohexyl)-ethan, Bis-(cyclohexyl)-propan,
- Z=: (CH₂): 4 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norbornandimethyl,
- Z₁=: (CH₂): 4 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norbornandimethyl, Trimethyl-hexamethylen,
und
- a =: 0 - 50 mol%, b = 0 - 100 mol%,
- a₁=: 0 - 50 mol%, b1= 0 - 100 mol%.

Die Summe a+a₁+b+b₁ ergibt 100 mol%. Die Summe c + c₁ ergibt 100 Gew. %.

Das Gesamt-Polyamid (I) weist in der Regel 30 bis 150 Ketteneinheiten, je nach Wahl der Monomereinheiten auf.

Das teilkristalline Polyamid (II) weist die folgenden Ketten gemäss den Formeln IIa und/oder IIb auf: 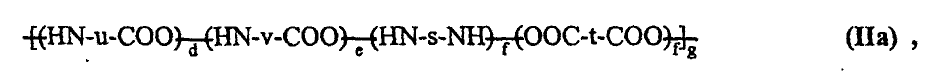 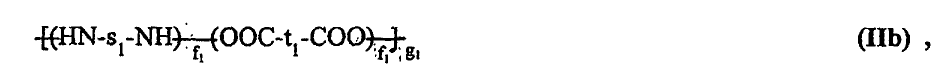 worin bedeuten:
- u =: (CH₂): 4 bis 12 CH₂-Einheiten, v= (CH₂): 4 bis 12 CK₂-Einheiten,
- s,s₁ =: (CH₂): 2 bis 12 CH₂-Einheiten, meta-Phenyl, para-Phenyl,
- t,t₁ =: (CH₂): 2 bis 12 CH₂-Einheiten, meta-Phenyl, para-Phenyl.

- f=: 0 bis 50 mol%, d= 0 bis 100 mol%
- f₁=: 0 bis 50 mol%, e= 0 bis 100 mol%.

Die Summe f+f₁+d+e ergibt 100 mol%.

Die Summe g+g₁ ergibt 100 Gew.%.

Die Phosphorverbindungen gemäss Formel (III) können in reiner Form oder als wässerige Lösung während der Extrusion der Blendkomponenten zugegeben werden:

[X(R')ₙP(O)₁(OR")ₘ] (III),

worin bedeuten:
X= H, -OR", 2-Pyridyl, -NH₂, -NHR', -NR'R", wobei X an (R') oder direkt an P gebunden sein kann,
   - R'=: (CH₂)_{n₁} linear oder verzweigt,
   - R"=: Li, Na, K, H,(CH₂)_{n₂} linear oder verzweigt,
n = ganze Zahl von 0 bis 5; 1 = 0, 1, 1,5, 2, 2,5; m = ganze Zahl von 0 bis 3, n₁ = ganze Zahl von 1 bis 12, n₂ = 1 bis 12.

Das Gesamt-Polyamid (II) weist in der Regel 100 bis 500 Ketteneinheiten, je nach Wahl der Monomereinheiten, auf.

Cyclische Phosphonsäureanhydrid-Verbindungen gemäss Formel (IV) können ebenfalls in reiner Form oder als wässerige Lösung während der Extrusion der Blendkomponenten zugegeben werden: 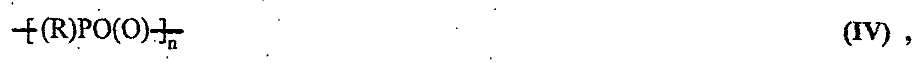 worin
- n =: 3, 4, 5, 6, alternierender -P-O- Heterocyclus mit 3,4, 5, 6 (P-O) Einheiten im Ring,
- R =: CH₃, C₂H₅, C₃H₇, C₄H₉, Isobutyl, 2,2,6,6-tetramethyl-4-piperidyl ist.

Selbstverständlich können auch Mischungen der Phosphorverbindungen eingesetzt werden.

Geeignete Herstellungsverfahren für die erfindungsgemässen Polyamid-Blends sind alle bekannten Extrusionsverfahren, mit der Maßgabe, daß Extrusionstemperaturen mit resultierenden Massetemperaturen zwischen 250 und 330°C angewendet werden und die Mischung einer Scherung von mehr als 10 s⁻¹ unterworfen wird.
Geeignete Verarbeitungsverfahren für die erfindungsgemässen Polyamid-Blends sind thermoplastische Verarbeitungsverfahren, die bei Temperaturen von 200 bis 350°C Spritzguss-Formteile, Folien, Platten, Fasern, Rohre, Hohlkörper, Stäbe herstellen.

Geeignete Anwendungen für Formteile, Folien, Fasern, Rohre, Stäbe und Beschichtungen aus den erfindungsgemässen Polyamid-Blends sind Brillen, Linsen, Beleuchtungskörper, Spiegel, Scheiben, Schaugläser, optische Bauteile, Armaturen, Flaschen, Behälter, medizinische-, kosmetische- und Hygiene-Artikel, Zahnbürsten, Griffe, Verpackungen, Modeschmuck, Kaschierfolien, Verbundfolien, Coextrusionsfolien, Platten, Halbzeug, zylindrisches Halbzeug, Lichtwellenleiter, Lichtleiterfasern, Kabelummantelung, Rohre und Leitungen, oder aus Lösung hergestellte Schutzüberzüge, Lacke und Beschichtungen für Drähte, Gitter, Körbe, Bleche, Magnetspulen, Ablenkspulen.

Die Erfindung soll nun anhand der folgenden Beispiele 1 bis 9 näher erläutert werden, ohne diese jedoch darauf zu beschränken. In Tabelle 1 sind die erhaltenen Werte für die mechanischen und optischen Eigenschaften gegenübergestellt.

### Beispiele

### Vergleichsbeispiel 1 (Copolyamid gemäss Formel (I))

19,3 kg Laurinlactam, 9,4 kg Bis-(4-amino-3-methyl-cyclohexyl)-methan (Isomerengemisch) und 6,3 kg Isophthalsäure werden mit 9,5 kg Wasser unter Spülung mit Stickstoff in einen 130 Liter Druckautoklaven gegeben. Anschliessend wird unter Rühren innerhalb 1 Stunde auf 300°C aufgeheizt und 4 Stunden unter Druck 20 bis 30 bar gerührt. Danach wird auf 1 bar entspannt, die Temperatur auf 280°C gesenkt und 1 bis 2 Stunden entgast. Bei Erreichen der Zielviskosität von 1,75 wird die Schmelze ausgetragen, granuliert und 24 Stunden bei 80°C getrocknet. Es wird ein transparentes Produkt mit einem Glasübergangspunkt (Tg) von 111°C und einer relativen Viskosität von 1,75 (gemessen 0,5% in m-Kresollösung) erhalten.
Das Produkt zeigt mittlere Transparenz (vgl. Tabelle 1) und sehr geringe Spannungsrissbeständigkeit gegenüber Isopropanol. Die Quellung in Ethanol ist hoch.

### Beispiel 2 (Polyamid-Blend (I/II) 100/0 (Gew.-%))

10,0 kg Laurinlactam, 11,76 kg Bis-(4-amino-3-methyl-cyclohexyl)-methan (BASF) (Isomerengemisch) und 8,0 kg Isophthalsäure werden mit 8 kg Wasser, unter Spülung mit Stickstoff, in einen 130 Liter Druckautoklaven gegeben. Wie Vergleichsbeispiel 1. Es wird ein transparentes Produkt mit einem Tg von 167°C und einer relativen Viskosität von 1,56 (gemessen 0,5% in m-Kresollösung) erhalten.
Das Produkt zeigt sehr hohe Transparenz, eine geringe Verfärbung, und sehr geringe Spannungsrissbeständigkeit gegenüber Isopropanol. Die Quellung in Ethanol ist sehr hoch.

### Vergleichsbeispiel 3 (Polyamid-Blend aus Polyamid gemäß Formeln Ia/Ib und Polyamid gemäß Formeln IIa/IIb: 70/30 Gew. %)

70 Gew.% des Polyamidprodukts aus Beispiel 2 werden mit 30 Gew.% Polyamid 12 (teilkristallines Polyamid gemäss Formel (II): Schmelzpunkt 175°C, relative Viskosität von 2,3 (gemessen 0,5% in m-Kresol) auf einem Zweiwellenextruder ZSK30 der Firma Werner u. Pfleiderer extrudiert. Die Massetemperatur beträgt 294°C, Massedruck 8 bar bei 100 Upm⁻¹. Der Durchsatz liegt bei 5 kg/h bei einem relativen Drehmoment von 50-55%. Das Extrudat wird im Wasserbad abgekühlt und granuliert. Anschliessend wird das Granulat 24 Stunden bei 90°C getrocknet.
Das Produkt zeigt sehr niedrige Homogenität (Schmelzenthalpie = 10,0 J/g), mittlere Transparenz und sehr starke Verfärbung bei niedrigem Durchsatz. Die Spannungsrissbeständigkeit gegenüber Isopropanol ist hoch. Die Quellung in Ethanol ist tief.

### Beispiel 4 (Polyamid-Blend aus Polyamid gemäss Formeln Ia/Ib und Polyamid gemäß Formeln IIa/IIb: 70/30 Gew.%)

70 Gew.% des Polyamidprodukts aus Beispiel 2 werden mit 30 Gew.% Polyamid 12 (teilkristallines Polyamid gemäss Formel (II): Schmelzpunkt 175°C, relative Viskosität von 2,3 (gemessen 0,5% in m-Kresol), die mit 0,2 Gew.% H₃PO₂ (50%ig) vermischt wurden, auf einem Zweiwellenextruder ZSK30 der Firma Werner u. Pfleiderer extrudiert. Die Massetemperatur beträgt 295°C, Massedruck 8 bar bei 100 Upm⁻¹. Der Durchsatz liegt bei 5 kg/h bei einem relativen Drehmoment von 55-60%. Das Extrudat wird im Wasserbad abgekühlt und granuliert. Anschliessend wird das Granulat 24 Stunden bei 90°C getrocknet.
Das Produkt zeigt ideale Homogenität (Schmelzenthalpie = 0 J/g), hohe Transparenz und sehr geringe Verfärbung bei niederem Durchsatz. Die Spannungsrissbeständigkeit gegenüber Isopropanol ist hoch. Die Quellung in Ethanol ist tief.

### Vergleichsbeispiel 5 (Polyamid-Blend aus Polyamid gemäss Formeln Ia/Ib und Polyamid der Formeln IIa/IIb: 70/30Gew. %)

70 Gew.% des Polyamidprodukts aus Beispiel 2 werden mit 30 Gew.% Polyamid 12 (teilkristallines Polyamid gemäss Formel (II): Schmelzpunkt 175°C, relative Viskosität von 2,3 (gemessen 0,5% in m-Kresol), auf einem Zweiwellenextruder (Doppelschneiderextruder) ZSK30 der Firma Werner u. Pfleiderer extrudiert. Die Massetemperatur beträgt 299°C, Massedruck 10 bar bei 200 Upm⁻¹. Der Durchsatz liegt bei 10 kg/h bei einem relativen Drehmoment von 60-65%. Das Extrudat wird im Wasserbad abgekühlt und granuliert. Anschliessend wird das Granulat 24 Stunden bei 90°C getrocknet.
Das Produkt zeigt niedere Homogenität (Schmelzenthalpie = 8,0 J/g), mittlere Transparenz und starke Verfärbung bei hohem Durchsatz. Die Spannungsrissbeständigkeit gegenüber Isopropanol ist leicht reduziert. Die Quellung in Ethanol ist tief.

### Beispiel 6 (Polyamid-Blend aus Polyamid gemäss Formeln Ia/Ib und Polyamid der Formeln IIa/IIb: 70/30Gew.%)

70 Gew.% des Polyamidprodukts aus Beispiel 2 werden mit 30 Gew.% Polyamid 12 (teilkristallines Polyamid gemäss Formel (II): Schmelzpunkt 175°C, relative Viskosität von 2,3 (gemessen 0,5% in m-Kresol), die mit 0,2 Gew % H₃PO₂ (50%ig) vermischt wurden, auf einem Zweiwellenextruder ZSK30 der Firma Werner u. Pfleiderer extrudiert. Die Massetemperatur beträgt 297°C, Massedruck 10 bar bei 200 Upm⁻¹. Der Durchsatz liegt bei 10 kg/h bei einem relativen Drehmoment von 65-75%. Das Extrudat wird im Wasserbad abgekühlt und granuliert. Anschliessend wird das Granulat 24 Stunden bei 90°C getrocknet.
Das Produkt zeigt ideale Homogenität (Schmelzenthalpie = 0 J/g) sehr hohe Transparenz und sehr geringe Verfärbung bei hohem Durchsatz. Die Spannungsrissbeständigkeit gegenüber Isopropanol ist hoch. Die Quellung in Ethanol ist tief.

### Beispiel 7 (Polyamid-Blend aus Polyamid gemäss Formeln Ia/Ib und Polyamid mit Formeln IIa/IIb: 70/30Gew. %)

70 Gew.% des Polyamidprodukts aus Beispiel 2 werden mit 30 Gew.% Polyamid 12 (teilkristallines Polyamid gemäss Formel (II): Schmelzpunkt 175°C, relative Viskosität von 2,3 (gemessen 0,5% in m-Kresol), die mit 0,2 Gew% H₃PO₂ (50%ig) vermischt wurden, auf einem Zweiwellenextruder ZSK30 der Firma Werner u. Pfleiderer extrudiert. Die Massetemperatur beträgt 249°C, Massedruck 10 bar bei 200 Upm⁻¹. Der Durchsatz liegt bei 10 kg/h bei einem relativen Drehmoment von 58%. Das Extrudat wird im Wasserbad abgekühlt und granuliert. Anschliessend wird das Granulat 24 Stunden bei 90°C getrocknet.
Das Produkt zeigt niedrige Homogenität (Schmelzenthalpie = 8,2 J/g), niedrige Transparenz und geringe Verfärbung bei hohem Durchsatz. Die Spannungsrissbeständigkeit gegenüber Isopropanol ist hoch. Die Quellung in Ethanol ist tief.

### Beispiel 8 (Polyamid-Blend aus Polyamid gemäss Formeln Ia/Ib und Polyamid gemäß Formeln IIa/IIb: 70/30Gew. %)

70 Gew.% des Polyamidprodukts aus Beispiel 2 werden mit 30 Gew.% Polyamid 12 (teilkristallines Polyamid gemäss Formel (II): Schmelzpunkt 175°C, relative Viskosität von 2,3 (gemessen 0,5% in m-Kresol), die mit 0,2 Gew% H₃PO₂ (50%ig) vermischt wurden, auf einem Zweiwellenextruder ZSK58 der Firma Werner u. Pfleiderer extrudiert. Die Massetemperatur beträgt 300°C, Massedruck 16 bar bei 200 Upm⁻¹. Der Durchsatz liegt bei 90 kg/h bei einem relativen Drehmoment von 30%. Das Extrudat wird im Wasserbad abgekühlt und granuliert. Anschliessend wird das Granulat 24 Stunden bei 90°C getrocknet.
Das Produkt zeigt hohe Homogenität (Schmelzenthalpie = 0 J/g) hohe Transparenz und mittlere Verfärbung. Die Spannungsrissbeständigkeit gegenüber Isopropanol ist hoch. Die Quellung in Ethanol ist tief.

### Vergleichsbeispiel 9 (Polyamid-Blend aus Polyamid gemäss Formeln Ia/Ib und Polyamid gemäß Formeln IIa/IIb: 70/30 Gew. %)

70 Gew.% des Polyamidprodukts aus Beispiel 2 werden mit 30 Gew.% Polyamid 12 (teilkristallines Polyamid gemäss Formel (II): Schmelzpunkt 175°C, relative Viskosität von 2,3 (gemessen 0,5% in m-Kresol), auf einem Zweiwellenextruder ZSK58 der Firma Werner u. Pfleiderer extrudiert. Die Massetemperatur beträgt 333°C, Massedruck 14 bar bei 200 Upm⁻¹. Der Durchsatz liegt bei 80 kg/h bei einem relativen Drehmoment von 33%. Das Extrudat wird im Wasserbad abgekühlt und granuliert. Anschliessend wird das Granulat 24 Stunden bei 90°C getrocknet.
Das Produkt zeigt ideale Homogenität (Schmelzenthalpie = 0 J/g), mittlere Transparenz und sehr hohe Verfärbung. Die Spannungsrissbeständigkeit gegenüber Isopropanol ist gering. Die Quellung in Ethanol ist tief.

**Tabelle 1**

| Beispiele | VB1 | B2 | VB3 | B4 | VB5 | B6 | B7 | B8 | VB9 |
|---|---|---|---|---|---|---|---|---|---|
| Polyamid-Blend (I)/(II) Gew.% | -- | 100/0 | 70/30 | 70/30 | 70/30 | 70/30 | 70/30 | 70/30 | 70/30 |
| Copolyamid (I) | 100 | | | | | | | | |
| Laurinlactam (Gew.%) | 55 | 34 | 54 | 54 | 54 | 54 | 54 | 54 | 54 |
| H₃PO₂/50%ig (Gew.%) | 0 | 0 | 0 | 0,2 | 0 | 0,2 | 0,2 | 0,2 | 0 |
| | | | | | | | | | |
| Temp. Extr. (°C) | -- | -- | 294 | 295 | 299 | 297 | 249 | 300 | 333 |
| Durchsatz (kg/h) | -- | -- | 5 | 5 | 10 | 10 | 10 | 90 | 80 |
| | | | | | | | | | |
| Tg(°C) | 111 | 167 | 121 | 116 | 119 | 115 | 117 | 121 | 116 |
| Schmelzenthalpie (J/g) | -- | -- | 10,0 | 0 | 8,0 | 0 | 8,2 | 0 | 0 |
| | | | | | | | | | |
| Kerbschlagzähigkeit/ -30°C (KJ/m²) | 8,6 | 7,8 | 8,2 | 8,1 | 7,5 | 7,9 | 8,9 | 7,4 | 7,5 |
| E-Modul (MPa) | 1800 | 2100 | 2000 | 1900 | 2000 | 1900 | 2000 | 1900 | 1900 |
| | | | | | | | | | |
| Transparenz (%)/3mm | 83 | 90 | 83 | 88 | 81 | 90 | 79 | 87 | 83 |
| YI/ASTMD1925/9mm | 12 | 8 | 24 | 6 | 21 | 4 | 11 | 12 | 26 |
| | | | | | | | | | |
| Spannungsrisse (MPa) | 17 | 20 | >80 | >80 | 70 | >80 | >80 | >80 | 20 |
| Quellung/ETOH (Gew%) | 36,3 | 42,2 | 19,2 | 18,5 | 19,1 | 18,6 | 19,0 | 18,6 | 19,5 |
| VB = Vergleichsbeispiel | | | | | | | | | |
| B = Beispiel, erfindunsgemäß | | | | | | | | | |
| YI = Yellow Index | | | | | | | | | |
| ETOH = Ethanol | | | | | | | | | |
| Temp. Extr. = Massetemperatur des Extrudats | | | | | | | | | |

### Verwendete Messmethoden:

∗ Tg (Glasübergangspunkt) und Schmelzenthalpie wurden am getrockneten Granulat mittels DSC-Gerät (Modell Universal V2.4F der Firma TA (Thermo Analysis Instruments) mit Aufheizrate 20°C/Min bestimmt. (Vorbehandlung der Proben: Trocknung bei 90°C für 24 Stunden.)
∗ Die Kerbschlagzähigkeit wurde an trockenen Prüfkörpern nach der Methode Charpy (ISO 179/1eA) bei -30°C bestimmt.
∗ Die Transparenz wurde über Lichttransmission an 3mm Farbplättchen auf dem UV-Spektrometer von Perkin Elmer bei 540 nm bestimmt.
∗ Die Messung des Zug-E-Moduls erfolgt an DIN Zugstäben im getrockneten Zustand bei einer Dehnungsgeschwindigkeit von lmm/Minute nach ISO 527.
∗ Der Yellow Index wurde an drei aufeinandergelegten Farbplättchen (je 3mm) nach ASTM D 1925 bestimmt.
∗ Zur Bestimmung der Spannungrissresistenz werden DIN Zugstäbe unter verschiedene Biegespannungen gebracht und 60 Sekunden in 100% Isopropanol eingetaucht. Angegeben wird jene Biegespannung, bei der innerhalb von 60 Sekunden ein Bruch stattfindet.
∗ Die Messung der Quellung wird in 95%igem technischem Ethanol durchgeführt, wobei DIN-Zugstäbe 192 Stunden bei Raumtemperatur gelagert werden. Gemessen wird die Gewichtszunahme in Gew.% des Original-Prüfkörpers durch Aufnahme des Quellungsmittels.

## Patentansprüche

1. Farblose, hochtransparente Polyamid-Zusammensetzung, enthaltend:
- 1 bis 99 Gew.% eines Polyamids (I),
**gekennzeichnet durch** Ketten mit den folgenden Formeln Ia und/oder Ib: 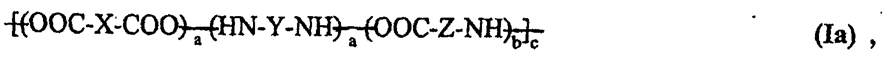 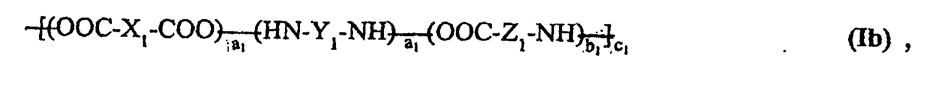 worin,
X = meta-Phenyl, para-Phenyl, (CH₂): 4 bis 12 CH₂-Einheiten, Cyclohexyl, Naphtyl, Norbornyl, Norbomandimethyl, Trimethyl-hexamethylen,
X₁ = meta-Phenyl, para-Phenyl, (CH₂): 2 bis 12 CH₂-Einheiten, Cyclohexyl, Naphtyl, Norbornyl, Norbomandimethyl, Trimethyl-hexamethylen,
Y = (CH₂): 2 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norborndimethyl, Trimethyl-hexamethylen, Bis-(cyclohexyl)-methan, Bis-(cyclohexyl)-ethan, Bis-(cyclohexyl)-propan,
Y₁ = (CH₂): 2 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norbornandimethyl, Trimethyl-hexamethylen, Bis-(cyclohexyl)-methan, Bis-(cyclohexyl)-ethan, Bis-(cyclohexyl)-propan,
Z = (CH₂): 4 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norbornyldimethyl,
Z₁ = (CH₂): 4 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norbornandimethyl, Trimethyl-hexamethylen,
bedeuten und
a = 0 - 50 mol%, b = 0 - 100 mol%, a₁ = 0 - 50 mol%, b₁ = 0 - 100 mol%
und
die Summe a+a₁+b+b₁ 100 mol%, ergibt die Summe c + c₁ 100 Gew.% ergeben,
- 99 bis 1 Gew.% einer teilkristallinen Polyamids (II), **gekennzeichnet durch** Ketten mit den Formeln IIa und/oder IIb: 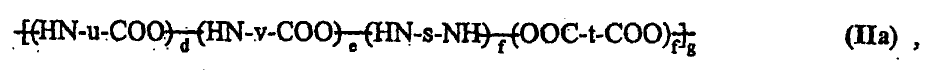 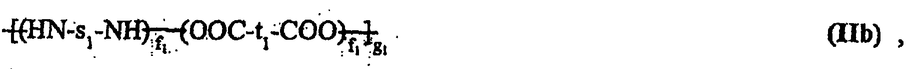 worin:
u = (CH₂): 4 bis 12 CH₂-Einheiten, v= (CH₂): 4 bis 12 CH₂-Einheiten,
s,s₁= (CH₂): 2 bis 12 CH₂-Einheiten, meta-Phenyl, para-Phenyl,
t,t₁ = (CH₂): 2 bis 12 CH₂-Einheiten, meta-Phenyl, para-Phenyl,
bedeuten und
f= 0 - 50 mol%, d = 0 - 100 mol%
f₁= 0 - 50 mol%, e = 0 - 100 mol%,
wobei die Summe f+f₁+d+e 100 mol% und
die Summe g+g₁ 100 Gew.% ergibt
und
- mindestens 0,01 bis 2,0 Gew.-Teile, bezogen auf 100 Gew.-Teile der Polyamide der Formeln Ia/Ib, IIa/Bb, einer Phosphorverbindung, die in reiner Form oder als wässerige Lösung eingesetzt werden kann, gemäß Formel III:
[X(R')ₙP(O)I(OR")ₘ] (III) ,
worin bedeuten:
X= H, -OR", 2-pyridyl, -NH₂, -NHR', -NR'R", wobei X an (R') oder direkt an P gebunden sein kann,
R' = (CH₂)_{n₁} linear oder verzweigt ist,
R"= Li, Na, K, H,(CH₂)_{n₂} linear oder verzweigt ist
und
n = ganze Zahl von 0 bis 5; 1 = 0, 1, 1,5,2, 2,5; m = ganze Zahl von 0 bis 3, n₁ = ganze Zahl von 1 bis 12, n₂ = 1 bis 12 sind,
und/oder
- 0,01 bis 15 Gew.-Teile, bezogen auf 100 Gew.-Teile der Polyamide der Formeln Ia/Ib, IIa/IIb, von cyclischen Phosphonsäureanhydrid-Verbindungen gemäss Formel (IV), die in reiner Form oder als wässerige Lösung eingesetzt werden können: 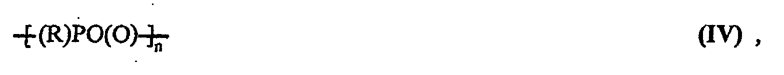 worin
n = 3, 4, 5, 6, ist alternierender -P-O- Heterocyclus mit 3, 4, 5, 6 (P-O) Einheiten im Ring,
R = CH₃, C₂H₅, C₃H₇, C₄H₉, Isobutyl, 2,2,6,6-tetramethyl-4-piperidyl bedeuten.

2. Farblose, hochtransparente Polyamid-Zusammensetzung gemäß Anspruch 1, enthaltend: 10 bis 90 Gew.-% eines Polyamids (I) und 90 bis 10 Gew.-% eines teilkristallinen Polyamids (31).

3. Polyamid-Zusammensetzung gemäss Anspruch 1 oder 2, **dadurch gekennzeichnet, daß** sie zusätzlich Füll- und Verstärkungsstoffe, Flammschutzmittel, Weichmacher, Gleitmittel, Farbstoffe, Verarbeitungshilfsmittel und andere, übliche Ausrüstungsmittel, insbesondere bis zu 2 Gew.-Teile Stabilisatoren, bezogen auf 100 Gew.-Teile Polyamid, enthalten.

4. Polyamid-Zusammensetzung gemäß den Ansprüchen 1 bis 3, **gekennzeichnet durch** eine hohe Spannungsrissbeständigkeit gegenüber Isopropanol (> 60 MPa) in Kombination mit einer idealen Homogenität (sehr niedrige Schmelzenthalpie von unter 8 J/g).

5. Verfahren zur Herstellung der Polyamid-Zusammensetzung gemäss den Ansprüchen 1 bis 3, **dadurch gekennzeichnet, dass** man aus einer Polymerschmelze der Blendkomponenten und der Phosphorverbindungen gemäß den Formelw III und/oder IV bei einer Temperatur von größer gleich 250°C eine fließfähige Mischung bildet und die Mischung einer Scherung von mehr als 10s⁻¹ unterwirft, wobei Extrusionstemperaturen, mit resultierenden Massetemperaturen, zwischen 250°C und 330°C angewendet werden.

6. Spritzguss-Formteile, Folien, Platten, Fasern, Rohre und Stäbe, herstellbar aus den Polyamid-Zusammensetzungen gemäss den Ansprüchen 1 bis 4.

7. Verwendung der Formteile, Folien, Fasern, Rohre, Stäbe aus den Polyamid-Zusammensetzungen gemäss den Ansprüchen 1 bis 5, für die Herstellung von Brillen, Linsen, Beleuchtungskörpern, Spiegeln, Scheiben, Schaugläsern, optischen Bauteilen, Armaturen, Flaschen, Behältern, medizinischen-, kosmetischen- und Hygiene-Artikeln, Zahnbürsten, Griffen, Verpackungen, Modeschmuck, Kaschierfolien, Verbundfolien, Coextrusionsfolien, Platten, Halbzeug, zylindrischem Halbzeug, Lichtwellenleitern, Lichtleiterfasern, Kabelummantelungen und Leitungen, Schutzüberzügen, Lacken und Beschichtungen für Drähte, Gitter, Körbe, Bleche, Magnetspulen und Ablenkspulen.

## Claims

1. A colorless, highly transparent polyamide composition comprising:
- 1 to 99 wt. % of a polyamide (I), **characterized by** chains with the following formulas Ia and/or Ib: 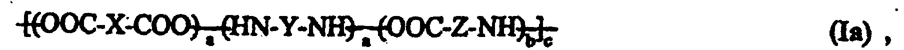 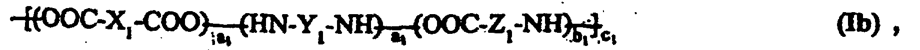 where
X = meta-phenyl, para-phenyl, (CH)₂: 4 to 12 CH₂ units, cyclohexyl, naphthyl, norbornyl, norbomane-dimethyl, trimethyl-hexamethylene,
X₁ = meta-phenyl, para-phenyl, (CH)₂: 2 to 12 CH₂ units, cyclohexyl, naphthyl, norbornyl, norbornane-dimethyl, trimethyl-hexamethylene,
Y = (CH₂): 2 to 12 CH₂ units, cyclohexyl, bis(methyl-cyclohexyl)methane, bis(methylcyclohexyl)ethane, bis(methyl-cyclohexyl)propane, norbomyl, norbomanedimethyl, trimethyl-hexamethylene, bis(cyclohexyl)methane, bis(cyclohexyl)ethane, bis(cyclohexyl)propane,
Y₁ = (CH₂): 2 to 12 CH₂ units, cyclohexyl, bis(methyl-cyclohexyl)methane, bis(methylcyclohexyl)ethane, bis(methyl-cyclohexyl)propane, norbornyl, norbomane-dimethyl, trimethyl-hexamethylene, bis(cyclohexyl)methane, bis(cyclohexyl)ethane, bis(cyclohexyl)propane,
Z = (CH₂): 4 to 12 CH₂ units, cyclohexyl, bis(methyl-cyclohexyl)methane, bis(methylcyclohexyl)ethane, bis(methyl-cyclohexyl)propane, norbornyl, norbornanedimethyl,
Z₁ = (CH₂): 4 to 12 CH₂ units, cyclohexyl, bis(methyl-cyclohexyl)methane, bis(methylcyclohexyl)ethane, bis(methyl-cyclohexyl)propane, norbornyl, norbornanedimethyl, trimethyl-hexamethylene
and
a = 0 - 50 mol %, b = 0 -100 mol %, a₁ = 0 - 50 mol %, b₁ = 0 - 100 mol %
and
the sum a + a₁ + b + b₁ gives 100 mol %, the sum c + c₁ gives 100 wt. %,
- 99 to 1 wt. % of a semi-crystalline polyamide (II), **characterized by** chains according to formulas IIa and/or IIb: 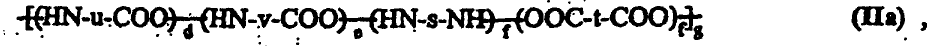 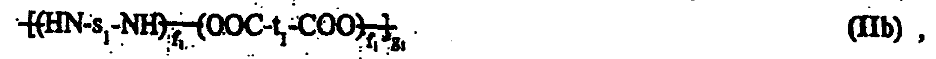 where:
u = (CH₂): 4 to 12 CH₂ units, v = (CH₂): 4 to 12 CH₂,
s, s₁ = (CH₂): 2 to 12 CH₂ units, meta-phenyl, para-phenyl,
t, ti = (CH₂): 2 to 12 CH₂ units, meta-phenyl, para-phenyl
and
f = 0 - 50 mol %, d = 0 - 100 mol %
f₁ = 0 - 50 mol %, e = 0 - 100 mol %,
where the sum f + f₁ + d + e gives 100 mol % and
the sum g + g₁ gives 100 wt. %,
and
- at least 0.01 to 2.0 parts by weight, based on 100 parts by weight of the polyamides of formulas Ia/Ib, IIa/IIb, of a phosphorus compound, which can be employed in the pure form or as an aqueous solution, according to formula III:
[X(R')ₙP(O)_{I}(OR")ₘ] (III)
where
X = H, -OR", 2-pyridyl, -NH₂, -NHR', -NR'R" where X can be bonded to (R') or directly to P,
**R' = (CH**_{**2**}**)**_{**n**_{**1**}} linear or branched,
**R"= Li, Na, K, H,(CH**_{**2**}**)**_{**in**_{**2**}} linear or branched,
and
n = integer from 0 to 5; 1 = 0, 1, 1.5, 2, 2.5; m = integer from 0 to 3, n₁ = integer from 1 to 12, n₂ = 1 to 12,
and/or
- 0.01 to 15 parts by weight, based on 100 parts by weight of the polyamides of formulas Ia/Ib, IIa/IIb, of cyclic phosphonic acid anhydride compounds according to formula (IV), which can be employed in a pure form or as an aqueous solution: 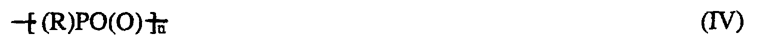 where
n = 3, 4, 5, 6, is alternating -P-O- heterocycle with 3, 4, 5, 6 (P-O) units in the ring,
R = CH₃, C₂H₅, C₃H₇, C₄H₉, isobutyl, 2,2,6,6-tetramethyl-4-piperidyl.

2. The colorless, highly transparent polyamide composition according to claim 1, comprising: 10 to 90 wt % of a polyamide (I) and 90 to 10 wt. % of a semi-crystalline polymide (II).

3. The polyamide composition according to claim 1 or 2, **characterized in that** in addition they comprise fillers and reinforcing agents, flame retardants, plasticizers, lubricants, dyes, processing aids and other, common finishing agents, especially up to 2 parts by weight of stabilizers, based on 100 parts per weight of polyamide.

4. The polyamide composition according to claims 1 to 3, **characterized by** a high stress cracking resistance to isopropanol (>60 MPa) in combination with an ideal homogeneity (very low melting enthalpy of less than 8 J/g).

5. A process for producing the polyamide composition according to claims 1 to 3, **characterized in that** a flowable mixture is formed from a polymer melt of the blend components and the phosphorus compounds according to formulas III and/or IV at a temperature of 250 °C or higher, and that the mixture is subjected to a shear stress of more than 10 s⁻¹ while applying extrusion temperatures with resulting melt temperatures between 250 and 330 °C.

6. Injection-molded parts, films, plates, fibres, tubes and rods that can be produced from the polymer compositions according to claims 1 to 4.

7. Use of the molded parts, films, fibres, tubes and rods made from the polyamide compositions according to claims 1 to 5 to produce spectacles, lenses, lamps, mirrors, panes, sight glasses, optical components, fittings, bottles, containers, medical, cosmetic, and hygiene articles, tooth-brushes, handles, packagings, fashion jewellery, backing films, laminated films, coextruded films, plates, semifinished goods, cylindrical preforms, optical wave guides, optical fibres, cable sheathing and conduits, protective coatings, varnishes and coatings for wires, grids; baskets, sheet metals, magnetic coils and deflection coils.

## Revendications

1. Composition de polyamide très transparente et incolore, contenant :
- 1 à 99% en poids d'un polyamide (I),
**caractérisé par** des chaînes ayant les formules Ia et/ou Ib suivantes : 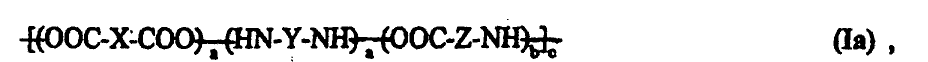 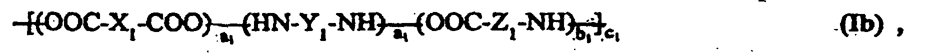 où
X = méta-phényle; para-phényle, (CH₂) :4 à 12 unités CH₂, cyclohexyle, naphtyle, norbornyle, norbornandiméthyle, triméthylhexaméthylène ;
X₁ = méta-phényle, para-phényle, (CH₂) :2 à 12 unités CH₂, cyclohexyle, naphtyle, norbornyle, norbornandiméthyle, triméthylhexaméthylène ;
Y = (CH₂) :2 à 12 unités CH₂, cyclohexyle, bis(méthylcyclohexyl)méthane, bis(méthylcyclohexyl)éthane, bis(méthylcyclohexyl)propane, norbornyle, norbornandiméthyle, triméthylhexaméthylène, bis(cyclohexyl)méthane, bis(cyclohexyl)éthane, bis(cyclohexyl)propane ;
Y₁ = (CH₂) :2 à 12 unités CH₂, cyclohexyle, bis(méthylcyclohexyl)méthane, bis(méthylcyclohexyl)éthane, bis(méthylcyclohexyl)propane, norbornyle, norbornandiméthyle, triméthylhexaméthylène, bis(cyclohexyl)méthane, bis(cyclohexyl)éthane, bis(cyclohexyl)propane ;
Z = (CH₂) :4 à 12 unités CH₂, cyclohexyle, bis(méthylcyclohexyl)méthane, bis(méthylcyclohexyl)éthane, bis(méthylcyclohexyl)propane, norbornyle, norbornandiméthyle ;
Z₁ = (CH₂) :4 à 12 unités CH₂, cyclohexyle, bis(méthylcyclohexyl)méthane, bis(méthylcyclohexyl)éthane, bis(méthylcyclohexyl)propane, norbornyle, norbornandiméthyle, triméthylhexaméthylène ;
a = 0-50% en moles, b = 0-100% en moles, a₁ = 0-50% en moles, b₁ = 0-100% en moles, et
la somme a+a₁+b+b₁ donne 100% en moles, la somme c+c₁ donne 100% en poids ;
- 99 à 1% en poids d'un polyamide partiellement cristallin (II), **caractérisé par** des chaines ayant les formules IIa et/ou IIb : 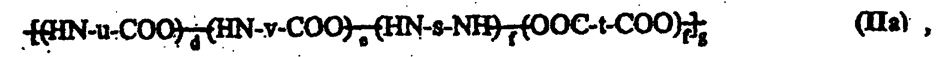 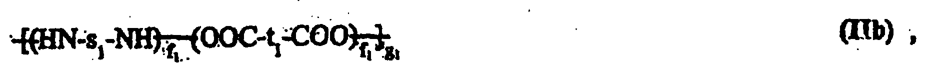 où
u = (CH₂) :4 à 12 unités CH₂ ; v = (CH₂) :4 à 12 unités CH₂ ;
s, s₁ = (CH₂) :2 à 12 unités CH₂, méta-phényle, para-phényle ;
t, t₁ = (CH₂) :2 à 12 unités CH₂, méta-phényle, para-phényle, et
f = 0-50% en moles, d = 0-100% en moles,
f₁ = 0-50% en moles, e = 0-100% en moles,
où la somme f+f₁+d+e donne 100% en moles et
la somme g+g₁ donne 100% en poids, et
- au moins 0,01 à 2,0 parties en poids, sur base de 100 parties en poids des polymaides des formules Ia/Ib, IIa/IIb, d'un composé phosphoré, qui peut être mis en oeuvre sous forme pure ou comme une solution aqueuse, selon la formule III :
**[X(R')**_{**n**}**P(O)l(OR")**_{**m**}**]** (III),
où
X = H, OR'', 2-pyridyle, NH₂, NHR', NR'R'', où X peut être lié sur (R') ou directement, sur P ;
R'= (CH₂)ₙ₁, linéaire ou ramifié ;
R'' = Li, Na, K, H, (CH₂)ₙ₂, linéaire ou ramifié, et
n = un nombre entier allant de 0 à 5 ; 1 = 0, 1, 1,5, 2, 2,5 ; m = un nombre entier allant de 0 à 3 ; n1 = un nombre entier allant de 1 à 12 ; n2 = 1 à 12, et/ou
- 0,01 à 15 parties en poids, sur base de 100 parties en poids des polyamides des formules Ia/Ib, IIa/IIb, de composés anhydride phosphonique cyclique selon la formule (IV), qui peuvent être mis en oeuvre sous forme pure ou comme une solution aqueuse : 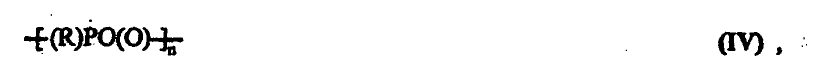 où
n = 3, 4, 5, 6 en alternant des hétérocycle -P-O- avec 3, 4, 5, 6 unités (P-O) dans le cycle ;
R = CH₃, C₂H₅, C₃H₇, C₄H₉, isobutyle, 2,2,6,6-tétraméthyl-4-pipéridyle.

2. Composition de polyamide très transparente et incolore selon la revendication 1, contenant :
10 à 90% en poids d'un polyamide (I) et 90 à 10% en poids d'un polyamide partiellement cristallin (II).

3. Composition de polyamide selon la revendication 1 ou 2, **caractérisée en ce qu'**elle contient en outre, des matières de charge et de renforcement, un agent de protection contre les flammes, un plastifiant, un lubrifiant, un colorant, un auxiliaire de traitement et d'autres agents d'équipement usuels, en particulier jusqu'à 2 parties en poids de stabilisants, sur base de 100 parties en poids de polyamide.

4. Composition de polyamide selon les revendications 1 à 3, **caractérisée par** une résistance élevée à la fissuration sous contrainte vis-à-vis de l'isopropanol (> 60 Mpa) en combinaison avec une homogénéité idéale (très faible enthalpie de fusion, inférieure à 8 J/g).

5. Procédé de préparation de la composition polyamide selon les revendications 1 à 3, **caractérisé en ce que** l'on forme à partir d'une masse fondue du polymère des composants de mélange et des composés phosphorés selon les formules III et/ou IV, à une température égale ou supérieure à 250°C, un mélange fluide et le mélange est soumis à un cisaillement de plus de 10 s⁻¹, où l'on utilise des températures d'extrusion, avec des températures résultantes de la masse, allant de 250°C à 330°C.

6. Préformés, feuilles, plaques, fibres, tubes et barreaux moulés par injection, pouvant être préparés à partir des compositions de polyamide selon les revendications 1 à 4.

7. Utilisation des préformés, feuilles, fibres, tubes et barreaux des compositions de polyamide selon les revendications 1 à 5, pour la préparation de lunettes, lentilles, appareils d'éclairage, miroirs, disques, verres indicateurs, éléments optiques, armatures, récipients, articles médicaux, cosmétiques et d'hygiène, faces d'attaque de dents, poignées, emballages, décorations, feuilles de doublage, feuilles de liaison, feuilles pour coextrusion, plaques, demi-produits, demi-produits cylindriques, guides d'onde lumineuse, fibres optiques, gaine de câble et conduites, couches protectrices, vernis et revêtements pour fil d'acier, grillage, paniers, tôles, bobine d'électro-aimant et bobine de déflexion.
